# EUROPÄISCHE PATENTSCHRIFT

(11) **EP 0 389 663 B1**
(45) Veröffentlichungstag und Bekanntmachung des Hinweises auf die Patenterteilung: **10.11.1993**
(21) Anmeldenummer: 89105715.0
(22) Anmeldetag: 31.03.1989
(51) Int. Cl.: H04Q 3/52

(54) **Breitbandsignal-Koppeleinrichtung**
Switching device for broad-band signals
Dispositif de commutation pour signaux à large bande

(43) Veröffentlichungstag der Anmeldung: 03.10.1990
(73) Patentinhaber: SIEMENS AKTIENGESELLSCHAFT, 80333 München (DE)
(72) Erfinder: Trumpp, Gerhard, Dipl.-Ing., D-8039 Puchheim (DE); Wolkenhauer, Jan, Dipl.-Ing., D-8000 München (DE)

(56) Entgegenhaltungen:
- EP-A- 0 249 836
- EP-A- 0 262 479
- EP-A- 0 264 046

## Beschreibung

Moderne Entwicklungen der Fernmeldetechnik führen zu diensteintegrierenden Nachrichtenübertragungs- u. -vermittlungssystemen für Schmalband- und Breitband-Kommunikationsdienste, die als Übertragungsmedium im Bereich der Teilnehmeranschlußleitungen Lichtwellenleiter vorsehen, über die sowohl die Schmalbandkommunikationsdienste, wie insbesondere 64-kbit/s-Digital-Telefonie, als auch Breitbandkommunikationsdienste, wie insbesondere 140-Mbit/s-Bildtelefonie, geführt werden, wobei in den Vermittlungsstellen auch (vorzuzgsweise gemeinsame Steuereinrichtungen aufweisende) Schmalbandsignal-Koppeleinrichtungen und Breitbandsignal-Koppeleinrichtungen nebeneinander vorgesehen sein können (DE-C-2 421 002).

Eine (z.B. aus EP-A1-0 262 479) bekannte Breitbandsignal-Koppeleinrichtung weist eine Koppelpunktmatrix in FET-Technik auf, deren Koppelelemente jeweils mit einem an seiner Steuerelektrode mit einem Durchschalte- bzw. Sperrsignal beaufschlagten, mit einer Hauptelektrode an die zugehörige Matrixausgangsleitung angeschlossenen Schalter-Transistor gebildet sind,
wobei die Koppelelemente jeweils einen mit dem Schalter-Transistor eine Serienschaltung bildenden Vorschalt-Transistor aufweisen,
der mit seiner Steuerelektrode an die zugehörige Matrixeingangsleitung angeschlossen ist und dessen der Serienschaltung abgewandte Hauptelektrode über einen Abtast-Transistor mit dem einen Anschluß der Betriebsspannungsquelle verbunden ist, mit deren anderen Anschluß die jeweilige Matrixausgangsleitung über einen Vorlade-Transistor verbunden ist,
und wobei Vorlade-Transistor und Abtast-Transistor gegensinnig zueinander jeweils an ihrer Steuerelektrode mit einem eine Bit-Durchschaltezeitspanne in eine Vorladephase und die eigentliche Durchschaltephase unterteilenden Koppelfeld-Ansteuer-Takt beaufschlagt sind, so daß in jeder Vorphase bei gesperrtem Abtast-Transistor die Matrixausgangsleitung über den Vorlade-Transistor zumindest angenähert auf das an dem genannten anderen Anschluss der Betriebsspannungsquelle herrschende Potential geladen wird. Diese bekannte Breitbandsignal-Koppeleinrichtung, die koppelelement-individuelle Abtasttransistoren oder matrixeingangsleitungs- oder matrixausgangsleitungs-individuelle Abtast-Transistoren aufweisen kann, benötigt zur Ansteuerung dieser Abtast-Transistoren eigene, die Koppelpunktmatrix durchziehende Taktleitungen, was einen entsprechenden Flächenbedarf erfordert und eine entsprechende kapazitive Belastung der Matrixausgangsleitungen mit sich bringt; Taktverteilung und Kopplungen zwischen Matrixeingangsleitungen und Matrixausgangsleitungen erfordern zur Gewährleistung einer ausreichenden Störsicherheit ausreichend große Signalamplituden auf den Matrixausgangsleitungen, was mit einem relativ hohen Leistungsverbrauch verbunden ist.

In der europäischen Patentanmeldung EP-A-0 354 254 ist schon eine Breitbandsignal-Koppeleinrichtung mit einer Koppelpunkt-Matrix in FET-Technik,
deren Eingänge jeweils mit einer Eingangstreiberschaltung versehen sein können,
deren Ausgänge jeweils mit einer Ausgangsverstärkerschaltung versehen sind,
deren jeweils von einer Halte-Speicherzelle gesteuerten Koppelelemente jeweils mit einer **Serienschaltung** eines an seiner Steuerelektrode mit einem Durchschalte- bzw. Sperrsignal beaufschlagten Schalter-Transistors und eines mit seiner Steuerelektrode an die zugehörige Matrixeingangsleitung angeschlossenen Eingangs-Transistors gebildet sind, **die** mit der der Serienschaltung abgewandten Hauptelektrode des einen Transistors an die zugehörige Matrixausgangsleitung angeschlossen ist,
und bei der die Matrixausgangsleitung mit einer Vorladepotentialquelle über eine Vorladeschaltung verbunden ist, die mit einem Entriegelungseingang an die Taktsignalleitung eines die Vorladephase einer in eine solche Vorladephase und die übrige Bit-Durchschaltezeitspanne unterteilten Bit-Durchschaltezeitspanne definierenden Vorladetaktsignals angeschlossen ist, so daß die Matrixausgangsleitung in jeder Vorladenphase auf ein Vorladepotential geladen wird,
vorgeschlagen worden, die eine Hubbegrenzung des Signals auf den Ausgangsleitungen der Koppeleinrichtung vorsieht. Dazu ist die der genannten Serienschaltung abgewandte Hauptelektrode des anderen Transistors jedes Koppelelementes mit dem einen Anschluß der Betriebsspannungsquelle über einen an seiner Steuerelektrode mit dem Ausgang einer matrixausgangsleitungs-individuellen Ausgangsverstärkerschaltung verbundenen matrixausgangsleitungs-individuellen Transistor verbunden; bei einer Signalzustandsänderung am Ausgang der Ausgangsverstärkerschaltung wird dieser Transistor gesperrt und damit eine weitere Umladung der Ausgangsleitung vermieden, womit der Signalhub auf der Ausgangsleitung begrenzt wird. Diese Hubbegrenzung ist indessen insofern noch unvollkommen, als nach dem Sperren des matrixausgangsleitungs-individuellen Transistors noch ein Ladungsausgleich zwischen der die zu dieser Matrixausgangsleitung führenden Koppelelemente mit dem matrixausgangsleitungs-individuellen Transistor verbindenden Leitung und der Matrixausgangsleitung stattfindet, so daß sich der Ausgangssignalpegel noch weiter ändert.

Die Erfindung stellt sich nun die Aufgabe, eine Breitbandsignal-Koppeleinrichtung mit Hubbegrenzung auf den Ausgangsleitungen anzugeben, die die oben angegebenen Nachteile vermeidet.

Die Erfindung betrifft eine Breitbandsignal-Koppeleinrichtung mit einer Koppelpunkt-Matrix in FET-Technik, an deren Eingängen jeweils eine Eingangstreiberschaltung vorgesehen sein kann und deren Ausgänge jeweils mit einer schwellwertbehafteten Ausgangstreiberschaltung versehen sind, wobei die Ausgangsleitungen über eine Vorladeschaltung, die mit einem eine Bit-Durchschaltzeitspanne in eine Vorladephase und die eigentliche Durchschaltephase unterteilenden Vorladetaktsignal gesteuert wird, in jeder Vorladephase auf ein zwischen den beiden Betriebspotentialen liegendes Vorladepotential oder auch auf eines der beiden Betriebspotentiale selbst aufladbar sind; diese Breitbandsignal-Koppeleinrichtung ist erfindungsgemäß dadurch gekennzeichnet, daß in der Koppeleinrichtung eine in jeder Bit-Durchschaltezeitspanne durchgeschaltete Verbindung einer mit einem Festsignal beaufschlagten Matrix-Eingangsleitung und einer Matrix-Ausgangsleitung vorgesehen ist, deren Signalpotential bei Erreichen des Schwellwertes der zugehörigen Ausgangstreiberschaltung an deren Ausgang ein Ausgangssignal auslöst, durch das alle Matrixeingangsleitungen gesperrt werden.

Die Erfindung bringt den Vorteil einer strikten Begrenzung des Signalhubs auf den Ausgangsleitungen mit sich. Die Reduzierung des Signalhubs auf den Ausgangsleitungen führt zu einer Verringerung der Umladeverluste, was gleichbedeutend mit einer verringerten Stromaufnahme ist. Mit der verringerten Stromaufnahme geht eine entsprechend verringerte Verlustleistung einher, die wahlweise eine Erhöhung der Packungsdichte von Koppelelementen oder der Schalthäufigkeit erlaubt. Darüber hinaus ergibt sich aus der verringerten Stromaufnahme eine Reduzierung von durch Stromspitzen bedingten Störungen der Betriebsspannung der Breitbandsignal-Koppeleinrichtung. Als zusätzlicher Vorteil ergibt sich durch die Signalhubbegrenzung eine Verringerung von nachteiligen Einflüssen auf benachbarte Signalwege.

Dabei kann in weiterer Ausgestaltung der Erfindung die in jeder Bit-Durchschaltezeitspanne durchgeschaltete Verbindung einer mit einem Festsignal beaufschlagten Matrix-Eingangsleitung und einer Matrix-Ausgangsleitung über einen angenähert in der Mitte der Koppelpunkt-Matrix liegenden Koppelpunkt verlaufen. Diese Maßnahme ermöglicht eine größtmögliche Verringerung der Auswirkungen herstellungsbedingter Abweichungen zwischen den Matrix-Leitungen, die zur Übertragung des Festsignals vorgesehen sind, und den übrigen Matrix-Leitungen.

Weitere Besonderheiten der Erfindung werden aus der nachfolgenden näheren Erläuterung der Erfindung anhand der Zeichnungen ersichtlich. Dabei zeigen
- FIG 1: das Schema einer erfindungsgemäßen Breitband-Koppeleinrichtung und
- FIG 2 bis FIG 4: Einzelheiten ihrer schaltungstechnischen Realisierung;
- FIG 5: verdeutlicht Signalzustände darin.

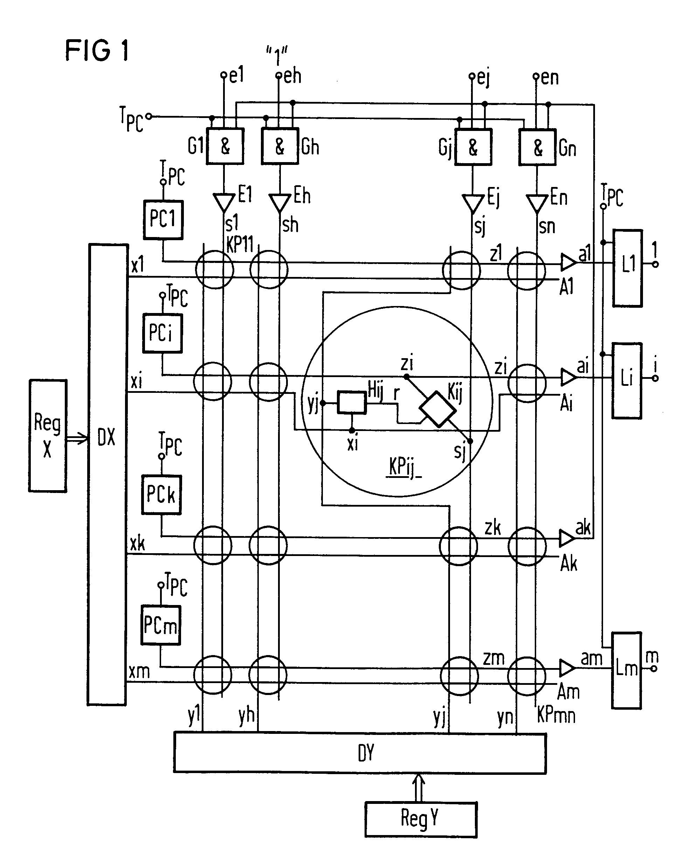

In der Zeichnung FIG 1 ist schematisch in zum Verständnis der Erfindung erforderlichen Umfange eine Breitbandsignal-Koppeleinrichtung skizziert, an deren zu Spaltenleitungen s1...sn einer Koppelpunktmatrix führenden, im Beispiel mit Eingangstreiberschaltungen E1...En versehenen Eingängen e1...en jeweils eine Torschaltung G1...Gn vorgesehen ist und deren von Zeilenleitungen z1...zm der Koppelpunktmatrix erreichte Ausgänge a1...am mit schwellwertbehafteten Ausgangstreiberschaltungen A1...Am versehen sind. Die Ausgänge a1...am, mit Ausnahme des Ausgangs ak, führen zu zeilenindividuellen Haltespeichern (Latch) (L1...Lm), denen ein Taktsignal T_{PC} zugeführt wird. Haltespeicher (Latch) sind hinreichend bekannt und müssen deshalb hier nicht weiter beschrieben werden. Der Ausgang ak einer vorzugsweise in der Mitte der Ausgangstreiberschaltungen A1...Am angeordneten Ausgangstreiberschaltung Ak führt zu jeweils einem Eingang der matrixeingangsseitigen Torschaltungen G1...Gn. Über weitere Eingänge wird den Torschaltungen G1...Gn jeweils ein Taktsignal T_{PC} zugeführt. Weitere Eingangsleitungen e1...en der Torschaltungen G1...Gn führen das jeweilige Eingangssignal, wobei der Eingang eh einer vorzugsweise in der Mitte der Torschaltungen G1...Gn angeordneten Torschaltung Gh ständig mit einem Festsignal "1" beaufschlagt sein möge.
Die Koppelpunktmatrix weist zeilenindividuelle Vorladeschaltungen PC1...PCm auf, die durch ein Taktsignal T_{PC} gesteuert werden.

Die Koppelpunktmatrix weist Koppelpunkte Kp11...KPmn auf, deren Koppelelemente, wie dies beim Koppelpunkt KPij für dessen Koppelelement Kij weiter ins Einzelne gehend angedeutet ist, jeweils von einer koppelpunktindividuellen Halte-Speicherzelle Hij (beim Koppelpunkt KPij) gesteuert sein können, deren Ausgang r zum Steuereingang des jeweiligen Koppelelements (Kij beim Koppelpunkt KPij) führt.

Die Halte-Speicherzellen ... Hij... werden gemäß FIG 1 durch zwei Ansteuerdecoder, nämlich einen Zeilendecoder DX und einen Spaltendecoder DY, über entsprechende Ansteuerleitungen x1...xm; y1...yn in zwei Koordinaten angesteuert.

Dazu mögen, wie dies aus FIG 1 ersichtlich ist, die beiden Ansteuerdecoder DX, DY von Eingangsregistern Reg X, Reg Y her jeweils mit einer einer Matrixreihe (Zeile bzw.Spalte) von Koppelpunkten gemeinsamen Koppelpunktzeilen- bzw. Koppelpunktspalten-Adresse beaufschlagbar sein, auf die hin sie jeweils an der der jeweiligen Koppelpunktreihen-Adresse entsprechenden Ansteuerleitung jeweils ein "1"-Ansteuersignal abgeben. Das Zusammentreffen eines Zeilenansteuersignals "1" und eines Spaltenansteuersignals "1" am Kreuzungspunkt der betreffenden Matrixzeile mit der betreffenden Matrixspalte beim Aufbau einer entsprechenden Verbindung bewirkt dann eine Aktivierung der dort befindlichen Halte-Speicherzelle, beispielsweise der Speicherzelle Hij, mit der Folge, daß das von der betreffenden Halte-Speicherzelle (Hij) gesteuerte Koppelelement, im Beispiel das Koppelelement Kij, leitend wird.

Damit das im Beispiel betrachtete Koppelelement Kij bei einem Abbau der betreffenden Verbindung wieder gesperrt wird, wird wiederum der Ansteuerdecoder DX vom Eingangsregister Reg X mit der betreffenden Zeilenadresse beaufschlagt, so daß der Zeilendecoder DX wiederum auf seiner Ausgangsleitung xi ein Zeilenansteuersignal "1" abgibt, und zugleich wird der Spaltendecoder DY von seinem Eingangsregister Reg Y her beispielsweise mit einer Leeradresse oder mit der Adresse einer Spalte von unbeschalteten Koppelpunkten beaufschlagt, so daß er auf seiner Ausgangsleitung yj ein Spaltenansteuersignal "0" abgibt; das Zusammentreffen von Zeilenansteuersignal "1" und Spaltenansteuersignal "0" bewirkt dann die Rücksetzung der Halte-Speicherzelle Hij mit der Folge, daß das von ihr gesteuerte Koppelelement Kij gesperrt wird.

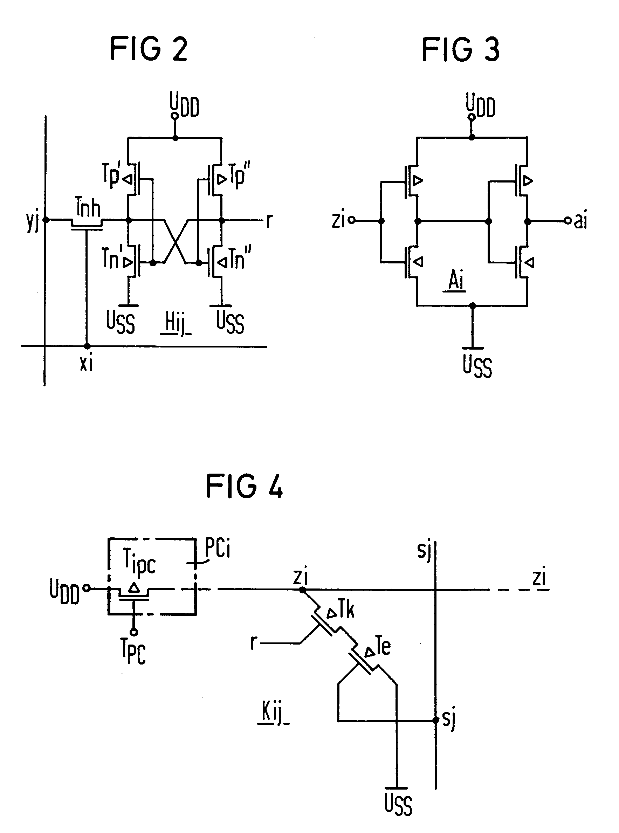

Die Halte-Speicherzellen ...Hij... können in an sich bekannter Weise ausgebildet sein; so können die Halte-Speicherzellen beispielsweise, wie dies z.B. aus EP-A-0 238 834 bekannt und auch in FIG 2 skizziert ist, mit einem n-Kanal-Transistor Tnh und zwei kreuzgekoppelten Inverterschaltungen (C-MOS-Inverterschaltungen Tp′ ,Tn′ Tp˝,Tn˝ gebildet sein, wobei eine Inverterschaltung eingangsseitig mit dem zugehörigen Decoderausgang yj des einen Ansteuerdecoders über den n-Kanal-Transistor Tnh verbunden ist, der seinerseits an seiner Steuerelektrode mit dem Ausgangssignal des zugehörigen Decoderausgangs xi des anderen Ansteuerdecoders beaufschlagt ist, und wobei eine Inverterschaltung ausgangsseitig zum Steuereingang r des zugehörigen Koppelelements führt. Wie die Koppelelemente ...Kij... schaltungstechnisch realisiert sein können, wird in FIG 4 verdeutlicht: Die Koppelelemente ...Kij... sind jeweils mit einer **Serienschaltung** eines an seiner Steuerelektrode von der Halte-Speicherzelle her mit einem Durchschalte- bzw. Sperrsignal beaufschlagten Schalter-Transistors Tk und eines mit seiner Steuerelektrode an die zugehörige Matrixeingangsleitung sj angeschlossenen Eingangs-Transistors Te gebildet, **die** mit der der Serienschaltung abgewandten Hauptelektrode des einen Transistors Tk an die zugehörige Matrix-Ausgangsleitung zi angeschlossen ist.
Dabei ist die Matrix-Ausgangsleitung zi über eine Vorladeschaltung PC mit einer Vorladepotentialquelle verbunden, von der her die Matrixausgangsleitung zi auf ein zwischen den beiden Betriebspotentialen liegendes Vorladepotential oder auch auf eines der beiden Betriebspotentiale selbst aufladbar ist. Eine Vorladepotentialquelle für ein zwischen den beiden Betriebspotentialen liegendes Vorladepotential kann insbesondere in prinzipiell (z.B. aus EP-A-0 249 837) bekannter Weise mit einem rückgekoppelten C-MOS-Inverter gebildet sein, über den jeweils in einer Vorladephase einer Bit-Durchschaltezeitspanne die Matrixausgangsleitung zumindest angenähert auf das der Schaltschwelle des Inverters entsprechende Potential geladen wird. Demgegenüber ist in dem in FIG 4 dargestellten Ausführungsbeispiel die Matrixausgangsleitung zi mit dem einen Anschluß (U_{DD}) der Betriebsspannungsquelle U_{DD}-U_{SS} über eine Vorladeschaltung verbunden, die, wie dies auch aus FIG 4 ersichtlich ist, in an sich (z.B. aus EP-A-0 262 479) bekannter Weise mit einem mit seiner Steuerelektrode an einer Vorladetaktleitung T_{PC} liegenden Vorlade-Transistor Tipc gebildet ist.

Die der Serienschaltung abgewandte Hauptelektrode des anderen Transistors Te ist kontinuierlich, d.h. nicht taktgesteuert, mit dem anderen Anschluß U_{SS} (Masse) der Betriebsspannungsquelle verbunden.

Wie die schwellwertbehafteten Ausgangstreiberschaltungen A1...Am schaltungstechnisch realisiert sein können, wird in FIG 3 verdeutlicht: Die Ausgangstreiberschaltungen A1...Am sind hier mit einer Kettenschaltung von zwei CMOS-Invertern gebildet, wobei die jeweilige Matrix-Ausgangsleitung (zi) mit den Steuerelektroden des den ersten CMOS-Inverter bildenden komplementären Transistorpaares verbunden ist und der Verbindungspunkt der Hauptelektroden des ersten Transistorpaares mit den Steuerelektroden des den zweiten CMOS-Inverter bildenden Transistorpaares verbunden ist. Die Verbindung der beiden Hauptelektroden des zweiten Transistorpaares bildet den Ausgang (ai) der Ausgangstreiberschaltung (Ai). Die charakteristische Schaltschwelle U_{TH} eines solchen mit CMOS-Invertern gebildeten Ausgangstreibers liegt etwa bei 40% der die Ausgangstreiberschaltung Ai speisenden Betriebsspannung. Demnach liegt für die Ausgangstreiberschaltung Ai nach FIG 3 die Schaltschwelle U_{TH} bei etwa 2V für eine Betriebsspannung U_{DD}-U_{SS} von 5V.

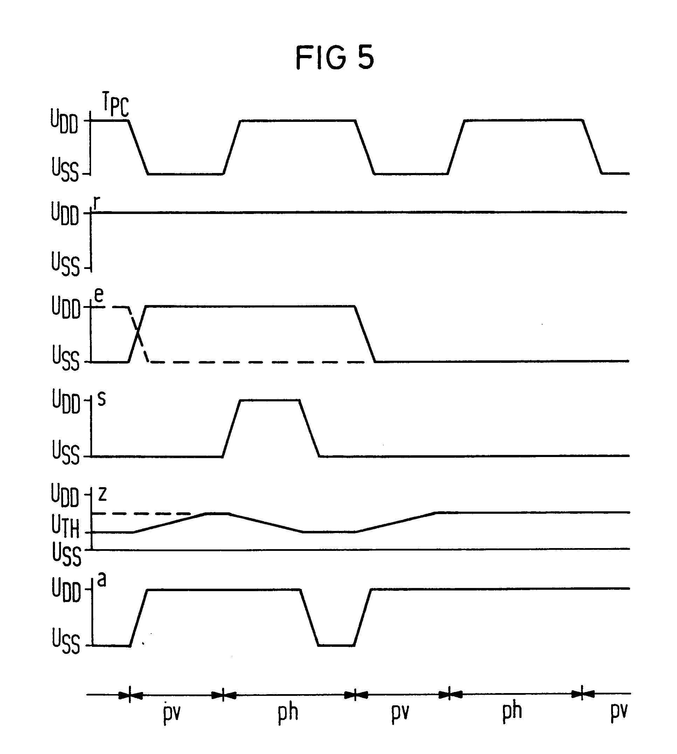

Durch ein entsprechendes, die Steuerelektrode jedes Vorlade-Transistors (Tipc in FIG 4) beaufschlagendes Vorladetaktsignal T_{PC} wird bewirkt, daß in jeder Vorladephase pv (in FIG 5, unten) einer durch das Vorladetaktsignal in eine solche Vorladephase pv und eine nachfolgende Hauptphase ph (in FIG 5) unterteilten Bitperiode jeder Vorlade-Transistor (Tipc) leitend ist, so daß während der Vorladephase pv die Matrixausgangsleitungen z1...zm über den jeweiligen Vorlade-Transistor auf ein zwischen den beiden Betriebspotentialen liegendes Vorladepotential oder auch auf eines der beiden Betriebspotentiale selbst aufgeladen werden. Ein solches in dem Ausführungsbeispiel gemäß FIG 4 geeignetes Vorladetaktsignal ist in FIG 5 in Zeile T_{PC} dargestellt.

In der darauffolgenden Hauptphase ph (siehe FIG 5, unten), werden im Beispiel durch ein "HIGH"-Vorladetaktsignal T_{PC} (siehe FIG 5, Zeile T_{PC}) die Vorlade-Transistoren Tipc (in FIG 4) gesperrt; gleichzeitig werden die matrixeingangsseitigen Torschaltungen G1...Gn entriegelt. Ist nun in einem Koppelelement Kij dessen Schalt-Transistor Tk (in FIG 4) aufgrund eines am Steuereingang r anliegenden (im Beispiel "HIGH"-)Durchschaltesignals (siehe FIG 5, Zeile r) leitend und befindet sich damit der Koppelpunkt im Durchschaltezustand, so wird jetzt je nach dem dem durchzuschaltenden Bit entsprechenden, auf der betreffenden Matrix-Eingangsleitung (Spaltenleitung) s1... sn herrschenden Signalzustand die mit dieser Matrix-Eingangsleitung (Spaltenleitung) s1... sn über das betreffende Koppelelement verbundene Matrix-Ausgangsleitung (Zeilenleitung) z1... zm entladen werden oder auf dem in der Vorladephase pv angenommenen Betriebspotential verbleiben. Erreicht dabei das Potential der Matrix-Ausgangsleitung z1...zm den Schwellwert der jeweiligen Ausgangstreiberschaltung A1...Am, wie er beispielsweise in FIG 5, Zeile z mit U_{TH} angegeben ist, so führt dies zu einem steilen Signalzustandswechsel auf der zugehörigen Ausgangsleitung a (vgl. FIG 5, Zeile a). Ein auf der betreffenden Matrix-Eingangsleitung anliegender Signalzustand wird dabei über den jeweiligen von seinem Steuereingang r her entriegelten Koppelpunkt invertiert durchgeschaltet.

Bei der erfindungsgemäßen Koppelpunktmatrix sind nun eine Matrix-Eingangsleitung (im Beispiel sh in FIG 1) und eine Matrix-Ausgangsleitung (im Beispiel zk in FIG 1) vorgesehen, über die in jeder Bit-Durchschaltezeitspanne ein Festsignal (im Beispiel ein "HIGH"-Signal) übertragen wird. Erreicht dabei das Potential der Matrix-Ausgangsleitung zk den Schwellwert der Ausgangstreiberschaltung Ak, wie er beispielsweise in FIG 5, Zeile z mit U_{TH} angegeben ist, so führt dies zu einem steilen Signalzustandswechsel auf der zugehörigen Ausgangsleitung ak (vgl. FIG 5, Zeile a). Erfindungsgemäß wird das Ausgangssignal der Festsignal-Verbindung eh-sh-KPkh-zk-ak, die während jeder Bit-Durchschaltezeitspanne das Festsignal überträgt, dazu verwendet, die Torschaltungen G1...Gn zu sperren und damit das weitere Entladen der jeweiligen Matrix-Ausgangsleitungen über die durchgeschalteten Koppelpunkte zu beenden, womit der Signalhub auf den jeweiligen Matrix-Ausgangsleitungen z1... zm begrenzt wird.

In FIG 5 ist für zwei aufeinanderfolgenden Bit-Durchschaltezeitspannen die Übertragung eines "HIGH -Signals und anschließend eines "LOW"-Signals (vgl. Zeile e) beispielsweise von einem Eingang ej (in FIG 1) zu einem Ausgang ai (in FIG 1) der Koppelpunktmatrix (FIG 1) dargestellt:
In der Vorladephase pv der in die Vorladephase pv und in die Hauptphase ph unterteilten Bit-Durchschaltezeitspanne werden, wie schon erläutert wurde, sämtliche Matrix-Ausgangsleitungen z1...zm vorgeladen (vgl. FIG 5, Zeile z); in der sich anschließenden Hauptphase ph werden die matrixeingangsseitigen Torschaltungen (G1...Gn in FIG 1) entriegelt, so daß das an dem Eingang ej anstehende "HIGH"-Signal (vgl. FIG 5, Zeile e) auf die zugehörige Matrix-Eingangsleitung sj durchgeschaltet wird, wodurch der Eingangstransistor Te (in FIG 4) des betrachteten Koppelpunktes KPij (in FIG 1) leitend geschaltet wird. Der Schaltertransistor Tk (in FIG 4) möge durch ein (im Beispiel "HIGH"-) Steuersignal r in den Durchschaltezustand gebracht sein (vgl. FIG 5, Zeile r); die betreffende Matrix-Ausgangsleitung zi wird dann über die Transitoren Tk und Te (drh. FIG 4) nach Masse entladen (vgl. FIG 5, Zeile z).
Auf der Festsignal-Verbindung eh-sh-KPkh-zk-ak (in FIG 1), die in jeder Bit-Durchschaltezeitspanne ein "HIGH"-Signal überträgt, läuft gleichzeitig in prinzipiell gleicher Weise der gleiche Vorgang ab. Erreicht dabei der Signalpegel auf der Matrix-Ausgangsleitung zk der Festsignal-Verbindung den Schwellwert U_{TH} der Ausgangstreiberschaltung Ak (vgl. FIG 5, Zeile z), so erfolgt ein steiler Signalzustandswechsel am Ausgang ak der Ausgangstreiberschaltung Ak (vgl. FIG 5, Zeile a). Das Ausgangssignal ak der Ausgangstreiberschaltung Ak sperrt sämtliche matrixeingangsseitigen Torschaltungen (G1...Gn in FIG1). Die zuvor betrachtete Matrix-Eingangsleitung sj geht daher in den "LOW"-Zustand (vgl. FIG 5, Zeile s) über, so daß der Eingangstransistor Te des Koppelpunktes (vgl. FIG 4) gesperrt wird und die Ausgangsleitung nicht mehr weiter entladen wird (vgl. FIG 5, Zeile z). Zum Ende der Hauptphase ph wird das am Ausgang ai der Ausgangstreiberschaltung Ai anstehende "LOW"-Signal (vgl. FIG 5, Zeile a) beispielsweise mit dem vom "HIGH"-Zustand in den "LOW"-Zustand führenden Signalwechsel des Vordadetaktsignals T_{PC} in den zugehörigen Haltespeicher (Latch) Li übernommen.
In der nachfolgenden Bit-Durchschaltezeitspanne möge nun gemäß FIG 5 über die betrachtete Eingangsleitung ej ein "LOW"-Signal übertragen werden. In der Vorladephase pv werden zunächst wieder sämtliche Matrix-Ausgangsleitungen z1 ...zm vorgeladen. In der sich anschließenden Hauptphase ph möge der Schalttransistor Tₖ in dem betrachteten Koppelpunkt (vgl. FIG 4) aufgrund eines (im Beispiel "HIGH"-)Steuersignals r wiederum im Durchschaltezustand sein (vgl. FIG 5, Zeile r). Da an der Eingangsleitung ej ein "LOW"-Signal ansteht, (vgl. Zeile e in FIG 5) bleibt die zugehörige Matrix-Eingangsleitung sj ebenfalls im "LOW"-Zustand mit der Folge, daß der Eingangstransistor Te in dem betrachteten Koppelpunkt (vgl. FIG 4) gesperrt bleibt, die zugehörige Matrix-Ausgangsleitung zi nicht entladen wird und der Signalzustand auf der betrachteten Ausgangsleitung erhalten bleibt (vgl. FIG 5, Zeile a); zum Ende dieser Hauptphase ph wird daher ein "HIGH"-Signal in den Haltespeicher (Latch) Li übernommen.

Wie auch in FIG 5, Zeile s ersichtlich ist, haben zum Ende einer Hauptphase ph alle Matrix-Eingangsleitungen entweder zwei gegensinnige oder gar keinen Signalübergang vollzogen, so daß durch solche Signalübergänge hervorgerufene Störungen auf den Matrix-Eingangsleitungen sich gegenseitig aufheben konnten und bei einer am Ende der Hauptphase ph vor sich gehenden Signalübernahme in einen nachfolgenden Haltespeicher (Latch) sich nicht mehr störend auswirken.

## Patentansprüche

1. Breitbandsignal-Koppeleinrichtung mit einer Koppelpunkt-Matrix in FET-Technik (KP11-KPmn), an deren Eingängen (e₁-eₙ) jeweils eine Eingangstreiberschaltung (E1-En) vorgesehen sein kann und deren Ausgänge (a₁-am) jeweils mit einer schwellwertbehafteten Ausgangstreiberschaltung (A1-Am) versehen sind, wobei die Ausgangsleitungen über eine Vorladeschaltung (PC1-PCm), die mit einem eine Bit-Durchschaltzeitspanne in eine Vorladephase (pv) und die eigentliche Durchschaltephase (ph) unterteilenden Vorladetaktsignal (TPc) gesteuert wird, in jeder Vorladephase (pv) auf ein zwischen den beiden Betriebspotentialen (U_{DDj}U_{SS}) liegendes Vorladepotential oder auch auf eines der beiden Betriebspotentiale selbst aufladbar sind,
**dadurch gekennzeichnet,**
daß in der Koppeleinrichtung eine in jeder Bit-Durchschaltezeitspanne durchgeschaltete Verbindung einer mit einem Festsignal beaufschlagten Matrix-Eingangsleitung (eh) und einer Matrix-Ausgangsleitung (ak) vorgesehen ist, deren Signalpotential bei Erreichen des Schwellwerts (U_{TH}) der zugehörigen Ausgangstreiberschaltung (AK) an deren Ausgang ein Ausgangssignal auslöst, durch das alle Matrix-Eingangsleitungen (e₁-eₙ) gesperrt werden.

2. Breitbandsignal-Koppeleinrichtung nach Anspruch 1,
**dadurch gekennzeichnet,**
daß die durchgeschaltete Verbindung über einen angenähert in der Mitte der Koppelpunkt-Matrix liegenden Koppelpunkt verläuft.

## Claims

1. Switching device for broadband signals, comprising a switching-point matrix in FET technology (KP11-KPmn), at the inputs (e₁-eₙ) of which in each case an input driver circuit (E1-En) can be provided and the outputs (a₁-aₘ) of which are in each case provided with an output driver circuit (A1-am) with threshold, the output lines being chargeable to a precharging potential which is between the two operating potentials (U_{DD};U_{SS});for also to one of the two operating potentials itself in each precharging phase (pv) via a precharging circuit (PC1-PCm) which is controlled by means of a precharging clock signal (TPc) dividing a bit switching period into a precharging phase (pv) and the actual switching phase (ph), characterised in that in the switching device, a connection, switched-through in each bit switching period, of a matrix input line (eh), to which a fixed signal is applied, and a matrix output line (ak) is provided, the signal potential of which, when the threshold value (U_{TH}) of the associated output driver circuit (AK) is reached, triggers at the output of the latter an output signal by means of which all matrix input lines (e₁-eₙ) are blocked.

2. Switching device for broadband signals according to Claim 1, characterized in that the switched-through connection extends via a switching point located approximately at the centre of the switching point matrix.

## Revendications

1. Dispositif de couplage pour signaux à large bande comportant une matrice de points de couplage réalisée selon la technique FET (KP11-KPmn), aux entrées (e₁-eₙ) de laquelle peut être prévu respectivement un circuit formant étage d'attaque d'entrée (E1-En) et dont les sorties (a₁-aₙ) sont équipées respectivement d'un circuit d'étage d'attaque de sortie (A1-Am), qui est affecté d'une valeur de seuil, les lignes de sortie pouvant être chargées à un potentiel de précharge situé entre les deux potentiels de service (U_{DD}-U_{SS}) ou égal à l'un des deux potentiels de service, par l'intermédiaire d'un circuit de précharge (PC1-PCm), qui est commandé par un signal de cadence de précharge (TPc) qui divise un intervalle de temps d'interconnexion de bits en une phase de précharge (pv) et en la phase d'interconnexion proprement dite (ph), lors de chaque phase de précharge (pv), caractérisé par le fait que dans le dispositif de couplage, il est prévu une liaison, interconnectée pendant chaque intervalle de temps d'interconnexion de bits, entre une ligne d'entrée (eh) de la matrice, chargée par le signal fixe, et une ligne de sortie (ak) de la matrice dont le potentiel de signal déclenche, lorsque la valeur de seuil (Uₜₕ) du circuit associé formant étage d'attaque de sortie (A_{K}) est atteinte, la délivrance d'un signal de sortie à la sortie de ce circuit, signal qui bloque toutes les lignes d'entrée (e₁-eₙ) de la matrice.

2. Dispositif de couplage pour signaux à large bande suivant la revendication 1, caractérisé par le fait que la liaison interconnectée passe par un point de couplage situé à proximité du centre de la matrice de points de couplage.
